Europäisches Patentamt

European Patent Office

Office européen des brevets

(11) Publication number: **0 068 561**
**B1**

# EUROPEAN PATENT SPECIFICATION

(45) Date of publication of patent specification: **04.09.85**

(21) Application number: **82200741.5**

(22) Date of filing: **15.06.82**

(51) Int. Cl.⁴: **C 08 F 6/00, B 29 C 47/80**

(54) **Process and device for the preparation of polymer melts which are substantially free of volatile components.**

(30) Priority: **17.06.81 NL 8102930**

(43) Date of publication of application:
**05.01.83 Bulletin 83/01**

(45) Publication of the grant of the patent:
**04.09.85 Bulletin 85/36**

(84) Designated Contracting States:
**DE FR GB IT NL**

(56) References cited:
**DE-A-1 529 882**
**GB-A- 798 912**
**US-A-3 874 090**

(73) Proprietor: **STAMICARBON B.V.**
**Postbus 10**
**NL-6160 MC Geleen (NL)**

(72) Inventor: **Brasz, Albert Johan Herman**
**Wieenbroek 6**
**NL-6121 HE Born (NL)**
Inventor: **Nagtzaam, Nicolaas Pieter**
**Irenelaan 13**
**NL-6133 BE Sittatd (NL)**
Inventor: **Bronke, Cornelis**
**Dunantstraat 20**
**NL-6164 GN Geleen (NL)**

(74) Representative: **De Boer, Jan et al**
**OCTROOIBUREAU DSM Postbus 9**
**NL-6160 MA Geleen (NL)**

Courier Press, Leamington Spa, England.

# 0 068 561

## Description

The invention relates to a process for the preparation of polymer melts which are substantially free of volatile components, starting from highly viscous alkene polymer melts which contain solvent(s) and/or monomer residues.

For the degasification of solvent-containing polymer melts it is known to use screw extruders provided with degasification orifices at reduced pressure.

However, in multi-screw extruders in particular, the processing of certain alkene polymer melts causes such a heating of the polymer melt that cooling through the extruder wall is necessary. However, the applicant has discovered that using such cooled degasification extruders for the processing of highly viscous polymer melts can have unfavourable consequences. Indeed, it has been found that when alkene polymers are processed which have a melt index (as defined below) of less than 4 dg/min, under the usual cooling conditions, the polymer melt in the degasification zone(s) of the extruder balls into a mass which no longer spreads over the extruder screw. This phenomenon has a very adverse effect on the degasification of the polymer melt.

It has now been found that these disadvantageous phenomena, occurring when highly viscous polyalkene melts are processed in a temperature-controlled degasification extruder, can be avoided, and that polymer melts can be obtained which are substantially free of volatile components, by working under well-defined conditions. These new processing conditions according to the invention are characterized in that an alkene polymer melt with a melt index lower than 4 dg/min (as defined below) at a content of volatile components of less than 10%, is treated in one or more sections with a kneading zone with pressure buildup and a degasification zone at reduced pressure, incorporated in a cooled degasification extruder, the kneading zone being cooled with a coolant, preferably of at most 85°C, and the degasification zone being heat-exchanged with a liquid having a temperature greater than the temperature of the coolant of the kneading zone.

Generally, such a temperature control, or rather heat exchange, cannot be effected straightforwardly. An extruder is usually surrounded by a jacket enabling heating or cooling of the contents of the extruder with a heating or cooling liquid or with other media for the supply or withdrawal of heat. Such a jacket wall is usually divided into 3 or 4 zones so as to enable independent temperature settings at the feed section, in two or more zones along the screw or screws and at the head. For the realization of the process according to the invention it is necessary that the temperatures in the kneading zones and in the degasification zones of the extruder to be used can be set independently of each other, or rather that the heat exchange, in particular the withdrawal of heat, can be controlled independently in these zones. This requires that the extruder be provided with suitable contrivances. This means that the jacket wall must be divided into sections coinciding with the kneading zones and the degasification zones, in which sections different cooling rates can be effected, for example by a difference in temperature between the cooling liquids. Any other method can of course also be used.

By the melt index of an alkene polymer as used herein is understood the amount of polymer flowing through a standard orifice under standard conditions of temperature and pressure, expressed in dg/min. For polyethylene, condition E of ASTM standard D-1238 is used. For other alkene polymers the standards used are comparable to those for polyethylene. Thus, for polypropylene, for instance, the melt index is measured according to ASTM standard D-1238, condition L.

Further research proved that the balling of the polymer melt occurs when the difference in temperature between the polymer melt and the cooled extruder wall exceeds a particular critical value. On the one hand, this critical difference in temperature appears to depend on the viscoelastic properties (e.g. molecule structure) of the polyalkene processed, the viscoelastic properties as such depending on the process temperature. Thus, it has been observed that the higher the molecular weight of the material, and/or the more branched its chains, the smaller the critical difference in temperature between the polymer melt and the extruder wall which marks incipient balling. In addition, the critical difference in temperature is smaller as the temperature of the melt is lower.

By preference, the process according to the invention is so embodied that in a cooled degasification extruder the temperature of the extruder wall in the degasification zone(s) is kept higher than the temperature at which the polymer melt would ball into a mass wholly or partially unsticks from the extruder screw, at the relative polymer melt composition and temperature.

This means that the temperature of the extruder jacket in the degasification zone(s) should satisfy the relation:

$$T_{ext} \, T_m - \Delta T_{cr}$$

where $T_{ext}$ is the temperature of the interior wall of the jacket of the extruder, $T_m$ is the temperature of the polymer melt, and $\Delta T_{cr}$ refers to the characteristic difference in temperature between a cooled extruder wall and the polymer melt which marks the balling of the polymer melt, at the composition and temperature of the polymer melt in question.

This characteristic extruder wall temperature can easily be determined empirically by one skilled in the art, for any composition of the polymer to be processed.

2

The efficiency of the process according to the invention is even improved when, in the kneading zone, a stripping agent for the volatile components is kneaded into the polymer melt, such as, in particular, water and/or steam, methanol or an inert gas such as for instance nitrogen.

As mentioned earlier, in the process according to the invention the polyalkene is processed in the degasification zones at reduced pressure, the content of volatile components being lower than 10% by weight.

However, the process is particularly suited for the processing of polymer solutions as obtained in processes by which alkenes are (co)polymerized in solution (the so-called solution processes). The polyalkenes thus produced have a content of volatile components (solvent, such as for instance hexane or benzene, and comonomer, such as for instance hexene, octene or decene) which can be considerably higher.

According to one embodiment of the invention the polymer melt can now be fed to the extruder also when the content of volatile components is between 5 and 25 wt.-%, the polymer solution passing through a flash evaporation zone with backward flash degasification before the low-pressure degasification zone(s), where the content of volatile components is reduced to less than 2—10 wt.-%.

By preference, a devolatilization extruder is used which has one backward flash degasification orifice and two forward low-pressure degasification zones, the pressure at the backward degasification orifice being approximately atmospheric, whereas in the first degasification zone a pressure ranging between 50 and 250 mbar is maintained and in the second degasification zone a pressure ranging between 10 and 100 mbar.

Very suitably, use can be made of a twin-screw extruder with co-rotating screws, and more in particular a twin-screw extruder with parallel fully intermeshing co-rotating screws. According to a further preferred embodiment of the invention the efficiency of the process can be improved even more by using a gear-type pump for the eventual pressure buildup in the polymer melt from the last degasification zone to the die plate.

Indeed, using such a gear-type pump enables degasification at a higher temperature, without too high a temperature, disadvantageous to the polymer, developing at the die plate.

The process may efficiently be carried out by using a twin-screw extruder in which the kneading zone(s) is (are) separated from the degasification zone(s) at reduced pressure by means of two double screw elements with opposite helix angles.

The process according to the present invention has proved to be particularly suitable for the treatment of melts of an ethylene copolymer with a melt index lower than 4 dg/min (ASTM standard D1238 cond. E), and in particular with a melt index lower than 3 dg/min. Materials which prove to be extra-ordinarily suitable for processing according to the process are, more in particular, polyalkene melts of so-called linear low-density polyethylene.

The invention will be elucidated by the following examples, without being restricted to them.

Examples

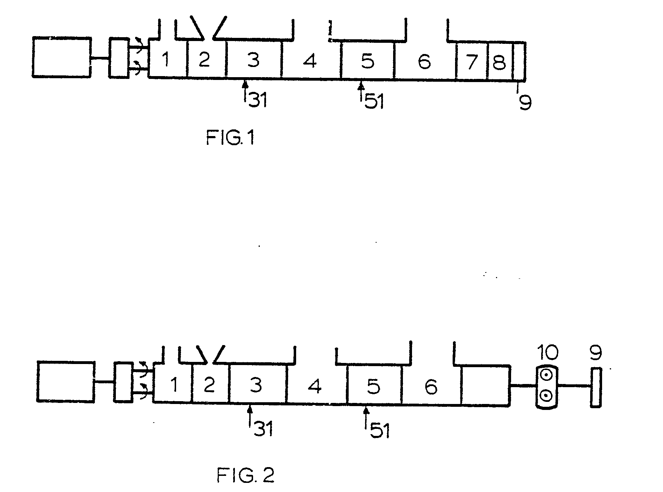

Melts of various highly viscous polyalkene materials (melt index 4 dg/min) are processed in a twin-screw degasification extruder with parallel fully intermeshing co-rotating screws, as indicated schematically in Figure 1 attached. The extruder comprises a feeding section 2, a backward degasification section 1 at substantially atmospheric pressure, a first mixing section 3 with a feed line 31 for stripping water/steam, a first degasification section 4 at reduced pressure, a second mixing section 5 with a feed line 51 for stripping water/steam, a second degasification section 6 at reduced pressure, a final pressure buildup section 7.8 and a granulator 9.

Example 1

A polyethylene sample with a density of 937 kg/m$^3$ and a melt index of 1 dg/min is fed to the extruder as a solution containing 87 wt.-% of polyethylene and 13 wt.-% hexane-octene mixture at 220°C, and processed under various temperature and cooling conditions. By the backward degasification of the polymer solution the content of volatile components is reduced so that the melt contains less than 6 wt.-% of volatile components when entering the first mixing section 3.

a. Cooling of the whole extruder jacket to a temperature below the critical 'balling' temperature

In the mixing sections 3 and 5 water is introduced as a stripping agent.

The extruder jacket is strongly cooled along the total length of the mixing sections, degasification sections and final pressure-buildup section (2800 l cooling oil of 100°C). Through a sight glass it can be observed that the polymer melt balls up and unsticks from the extruder screws. The temperature of the extruder jacket and of the polymer melt in the degasification zones 4 and 6, as well as the temperature of the melt on the pressure side of the die plate of the granulator 9, are given in Table 1, together with the content of volatile components in the polymer melt after the last degasification zone.

b. Cooling of the whole extruder jacket to a temperature above the critical 'balling' temperature

In the mixing sections 3 and 5 water is introduced as a stripping agent. Along the total length of the mixing sections, degasification sections and the final pressure-buildup section, the extruder jacket is cooled to such an extent (2800 l cooling oil of 210°C) that no balling of the polymer melt in the degasification zones occurs. The temperatures of the extruder jacket and of the polymer melt in the degasification sections 4 and 6, as well as the temperature of the melt on the pressure side of the die plate of the granulator 11 (not shown), are given in Table 1, together with the content of residual hexane and octene in the polymer melt after the last degasification zone. The total content of residual volatile components amounts to 560 ppm, but the temperature of the melt at the die plate is considerably higher than in the above experiment.

c. Processing conditions according to the invention: selective cooling of the extruder jacket in the mixing sections

In the mixing sections 3 and 5 water is introduced as a stripping agent. In the mixing sections 3 and 5 and in the final pressure-buildup section 7/8, the extruder jacket is intensely cooled (2100 l cooling oil of 210°C). In the degasification sections 4 and 6 the extruder jacket is cooled to a limited extent (900 l cooling oil of 170°C).

Through the sight glasses in the degasification sections it can be observed that the polymer melt does not ball up and spreads well over the extruder screws. The temperatures of the extruder jacket and of the polymer melt in the degasification zones, as well as the temperature of the melt at the die plate are shown in Table 1, together with the content of volatile components in the polymer melt after the last degasification zone.

TABLE 1

Degasification of a polyethylene melt with a melt index of 1 dg/min, under processing conditions according to the invention (c) and under reference conditions (a and b)

| | Temperatures in °C | | | | | | | Residue contents (ppm) | |
| | 1st Degasification zone | | | 2nd Degasification zone | | | Die plate | | |
| Processing conditions | $T_{ext}$ | $T_m$ | $\Delta T$ | $T_{ext}$ | $T_m$ | $\Delta T$ | | hexane | octene |
|---|---|---|---|---|---|---|---|---|---|
| Intense cooling whole extruder a) | 152 | 186 | 34 | 144 | 175 | 31 | 220 | 780 | 1890 |
| Moderate cooling whole extruder b) | 230 | 248 | 18 | 225 | 248 | 23 | 268 | 140 | 320 |
| Selective intense cooling in mixing sections c) | 193 | 204 | 11 | 180 | 192 | 12 | 227 | 300 | 680 |

Example 2

A polyethylene sample with a density of 920 kg/m$^3$ and a melt index of 2 dg/min is fed to an extruder as a solution containing 87 wt.-% of polyethylene and 13 wt.-% hexane-octene mixture, at a temperature of 220°C, and is further processed under various heating and cooling conditions.

By the backward degasification of the polymer solution the content of volatile components is reduced and amounts to less than 6 wt.-% when the solution enters the first mixing section 3.

In the mixing sections 3 and 5 water is introduced as a stripping agent.

a. Cooling of the whole extruder jacket to a temperature below the critical 'balling' temperature

Along the total length of the mixing sections, degasification sections and the final pressure-buildup section, the extruder jacket is intensely cooled (2800 l cooling oil of 78°C). The polymer melt balls up in the degasification zones and does not spread over the extruder screws any longer.

The temperatures of the extruder jacket and of the polymer melt in the degasification zones, and the temperature of the melt on the pressure side of the die plate, are given in Table 2, together with the content of volatile components in the polymer melt after the last degasification.

b. Cooling of the whole extruder jacket to a temperature above the critical 'balling' temperature

Along the total length of the mixing sections, degasification sections and final pressure-buildup section, the extruder jacket is cooled to such an extent (2800 l cooling oil of 185°C) that no balling of the polymer melt in the degasification zones occurs. The temperature of the extruder jacket and of the polymer melt in the degasification zones and the temperature of the melt on the pressure side of the die plate are given in Table 2, together with the content of residual hexane and octene in the polymer melt after the last degasification zone. The total content of residual volatile components amounts to 965 ppm, but the temperature of the melt at the die plate is considerably higher than in the above experiment.

4

c. Processing conditions according to the invention: selective cooling of the extruder jacket in the mixing sections

Intense selective cooling is applied to the extruder jacket in the mixing sections 3 and 5 and in the final pressure-buildup section 7/8 (1900 l cooling oil of 85°C).

Limited cooling is applied in the degasification sections (900 l cooling oil of 165°C).

The polymer melt does not ball up and spreads well over the extruder screws. The temperatures of the extruder jacket and of the polymer melt as measured in the degasification zones, as well as the temperature of the melt at the die plate, are given in Table 2, together with the content of residual hexane and octene in the polymer melt after the last degasification zone.

TABLE 2

Degasification of a polyethylene melt with a melt index of 1 dg/min (sic!), under processing conditions according to the invention (c) and under reference conditions (a and b)

| | Temperatures in °C | | | | | | | Residue contents (ppm) | |
| | 1st Degasification zone | | | 2nd Degasification zone | | | Die plate | | |
| Processing conditions | $T_{ext}$ | $T_m$ | $\Delta T$ | $T_{ext}$ | $T_m$ | $\Delta T$ | | hexane | octene |
|---|---|---|---|---|---|---|---|---|---|
| Intense cooling of whole extruder a) | 127 | 172 | 45 | 123 | 165 | 42 | 200 | 970 | 2380 |
| Moderate cooling of whole extruder b) | 205 | 222 | 17 | 201 | 220 | 19 | 230 | 215 | 750 |
| Intense selective cooling in mixing sections c) | 185 | 193 | 8 | 178 | 185 | 7 | 205 | 320 | 725 |

Example 3

Pressure buildup before the die plate with the aid of a gear-pump

A polyethylene sample with a density of 937 km³ and a melt index of 1 dg/min is processed as a solution containing 87 wt.-% of polyethylene and 13 wt.-% hexene-octene mixture in a degasification extruder similar to the one described above, except that the final pressure buildup is not effected in a twin-screw section, but instead the extruder at the outlet of the last degasification zone 6 is connected with a gear-pump 10 which provides the pressure required for the granulator as indicated in Figure 2.

The polymer solution is introduced at a temperature of 220°C and by the backward degasification the content of volatile components is reduced to less than 6 wt.-%.

In the mixing sections 3 and 5 water is introduced as a stripping agent. The extruder jacket is cooled selectively in the mixing sections 3 and 5, and is not cooled in the degasification sections 4 and 6, to the effect that the temperature of the melt leaving last degasification zone is 239°C. By using the gear-pump the temperature of the melt at the die plate of the granulator is not higher than 240°C, while a total content of residual volatile components of 560 ppm is measured. When the final pressure buildup is effected with the aid of a twin-screw section 7/8 according to Figure 1, the temperature of the melt leaving the last degasification zone has to be 221°C, to be achieved by cooling, if the same temperature of 240°C is to be achieved at the die plate of the granulator. Under those conditions a total content of volatile components of 850 ppm is measured.

## Claims

1. Process for the preparation of polymer melts substantially free of volatile components, of polyalkenes with a melt index lower than 4 dg/min, by processing of melts containing volatile components in a cooled degasification extruder, characterized in that the polyalkene, at a content of volatile components of less than 10%, is treated in one or more sections with a kneading zone with pressure buildup and a degasification zone at reduced pressure, the kneading zone being cooled with a coolant, and the degasification zone being heat-exchanged with a liquid having a temperature greater than the temperature of the coolant of the kneading zone.

2. Process according to claim 1 in which the kneading zone is cooled with a coolant of at most 85°C.

3. Process according to claim 1, characterized in that the temperature of the extruder jacket in the degasification zone(s) is higher than the temperature at which, at the polymer melt composition and temperature in question, the polymer balls into a mass which completely or partially unsticks from the extruder screw.

4. Process according to any one of claims 1—3, characterized in that the temperature of the extruder jacket in the degasification zone(s) satisfies the condition

$$T_{ext} \quad T_m - \Delta T_{cr}$$

where $T_{ext}$ is the temperature of the interior wall of the extruder jacket and $T_m$ is the temperature of the polymer melt, while $\Delta T_{cr}$ represents the characteristic critical difference in temperature between a cooled extruder wall and a polymer melt at which, for the polymer melt composition and temperature in question, the polymer melt balls into a mass which substantially does not spread over the extruder screw.

5. Process according to any one of claims 1—4, characterized in that the kneading zone(s) a stripping agent for the volatile components kneaded into the melt.

6. Process according to claim 5, characterized in that water and/or steam is used as stripping agent.

7. Process according to any one of claims 1—6, characterized in that the polymer melt undergoes preliminary treatment in a flash degasification zone with backward flash degasification, where the content of the volatile components is reduced from an initial value between 5 and 25 wt.-% to a value lower than 2—10 wt.-%.

8. Process according to any one of claims 1—7, characterized in that a degasification extruder with backward flash degasification orifice and two forward degasification zones at reduced pressure is used, the pressure at the backward degasification orifice being approximately atmospheric, while at the first degasification zone a pressure ranging between 50 and 250 mbar is maintained, and at the second degasification zone a pressure ranging between 10 and 100 mbar.

9. Process according to any one of claims 1—8, characterized in that a twin-screw extruder with co-rotating screws is used.

10. Process according to claim 8, characterized in that an extruder with parallel fully intermeshing screws is used.

11. Process according to any one of claims 1—10, characterized in that the eventual extruder pressure at the outlet of the extruder after the outlet of the last degasification zone is achieved by means of a gear-pump.

12. Process according to claim 11, characterized in that a twin-screw extruder is used in which the kneading zone(s) are separated from the degasification zone(s) at reduced pressure by means of two double screw elements with opposite helix angles.

13. Process according to any one of claims 1—12, characterized in that a polyalkene melt is treated which consists of an ethylene polymer or copolymer with a melt index lower than 4 according to ASTM standard D-1238 cond. E.

14. Process according to claim 13, characterized in that an ethylene polymer or copolymer with a melt index lower than 3 is treated.

15. Process according to any one of claims 13—14, characterized in that a polyalkene melt of linear low-density polyethylene is treated.

16. Extruder for conducting the process according to any one of claims 1—15, which consists of a twin-screw extender which comprises, besides one or more kneading zones, one or more degasification zones and which has been provided with contrivances to control the heat exchange in the kneading zones and in the degasification zones independently.

**Patentansprüche**

1. Verfahren zur Herstellung von im wesentlichen von flüchtigen Bestandteilen freien Polymerschmelzen von Polyalkenen mit einem Schmelzindex niedriger als 4 dg/min, durch Verarbeiten von flüchtige Bestandteile enthaltenden Schmelzen in einem gekühlten Entgasungsextruder, dadurch gekennzeichnet, daß das Polyalken, bei einem Gehalt an flüchtigen Komponenten von weniger als 10%, in einem oder mehreren Abschnitten einer Knetzone unter Druckerhöhung und einer Entgasungszone bei herabgesetztem Druck behandelt wird, wobei die Knetzone mit einem Kühlmittel gekühlt wird und die Entgasungszone im Wärmeaustausch mit einer Flüssigkeit steht, deren Temperatur höher ist als die Temperatur des Kühlmittels der Knetzone.

2. Verfahren nach Anspruch 1, dadurch gekennzeichnet, daß die Knetzone mit einem Kühlmittel von höchstens 85°C gekühlt wird.

3. Verfahren nach Anspruch 1, dadurch gekennzeichnet, daß die Temperatur des Extrudermantels in der (den) Entgasungszone(n) höher ist als die Temperatur, bei welcher, für die betreffende Zusammensetzung und Temperatur der Polymerschmelze, das Polymer sich zu einer Masse zusammenballt, die sich ganz oder teilweise von der Extruderschraube ablöst.

4. Verfahren nach einem der Ansprüche 1—3, dadurch gekennzeichnet, daß die Temperatur des Extrudermantels in der (den) Entgasungszone(n) die Bedingung

$$T_{ext} > T_m - \Delta T_{cr}$$

erfüllt, worin $T_{ext}$ die Temperatur der Innenwand des Extrudermantels und $T_m$ die Temperatur der Polymerschmelze ist, während $\Delta T_{cr}$ die charakteristische Temperaturdifferenz zwischen einer gekühlten Extruderwand und einer Polymerschmelze darstellt, bei welcher, für die betreffende Zusammensetzung und Temperatur der Schmelze, das Polymer sich zu einer Masse zusammenballt, die im wesentlichen nicht auf der Extruderschraube ausgebreitet ist.

5. Verfahren nach einem der Ansprüche 1—4, dadurch gekennzeichnet, daß in der (den) Knetzone(n) ein Strippmittel für die flüchtigen Bestandteile in die Schmelze eingeknetet wird.

6. Verfahren nach Anspruch 5, dadurch gekennzeichnet, daß Wasser und/oder Wasserdampf als Strippmittel verwendet wird.

7. Verfahren nach einem der Ansprüche 1—6, dadurch gekennzeichnet, daß die Polymerschmelze einer Vorbehandlung in einer Blitzentgasungszone mit rückwärts befindlicher Blitzentgasung unterzogen wird, worin der Gehalt an flüchtigen Bestandteilen von einem anfänglichen Wert zwischen 5 und 25 Masse-% auf einen Wert unter 2—10 Masse-% herabgesetzt wird.

8. Verfahren nach einem der Ansprüche 1—7, dadurch gekennzeichnet, daß ein Entgasungsextruder mit rückwärts befindlicher Blitzentgasungsöffnung und zwei vorwärts liegenden Entgasungszonen unter herabgesetztem Druck verwendet wird, wobei der Druck an der rückwärtigen Entgasungsöffnung annähernd gleich Atmosphären druck ist, während in der ersten Entgasungszone ein Druck im Bereich zwischen 50 und 250 mbar aufrechterhalten wird und in der zweiten Entgasungszone ein Druck im Bereich zwischen 10 und 100 mbar.

9. Verfahren nach einem der Ansprüche 1—8, dadurch gekennzeichnet, daß ein Doppelschraubenextruder mit co-rotierenden Schrauben verwendet wird.

10. Verfahren nach Anspruch 8, dadurch gekennzeichnet, daß ein Extruder mit parallel voll ineinandergreifenden Schrauben verwendet wird.

11. Verfahren nach einem der Ansprüche 1—10, dadurch gekennzeichnet, daß der allfällige Extruderdruck am Auslaß des Extruders nach dem Auslaß der letzten Entgasungszone mittels einer Getriebepumpe erreicht wird.

12. Verfahren nach Anspruch 11, dadurch gekennzeichnet, daß ein Doppelschraubenextruder verwendet wird, in welchem die Knetzone(n) von der (den) Entgasungszone(n) unter herabgesetztem Druck mit Hilfe von zwei Doppelschraubenelementen mit entgegengesetzten Gewindewinkeln getrennt sind.

13. Verfahren nach einem der Ansprüche 1—12, dadurch gekennzeichnet, daß eine Polyalkenschmelze behandelt wird, die aus einem Äthylenpolymer oder -copolymer mit einem Schmelzindex niedriger als 4 gemäß ASTM Standard D-1238 Bed. E besteht.

14. Verfahren nach Anspruch 13, dadurch gekennzeichnet, daß ein Äthylenpolymer oder -copolymer mit einem Schmelzindex niedriger als 3 behandelt wird.

15. Verfahren nach Anspruch 13 oder 14, dadurch gekennzeichnet, daß eine Polyalkenschmelze von linearem Polyäthylen niedriger Dichte behandelt wird.

16. Extruder zur Durchführung des Verfahrens gemäß einem der Ansprüche 1—15, bestehend aus einem Doppelschraubenextruder, welcher, neben einer oder mehreren Knetzonen, eine oder mehrere Entgasungszonen umfaßt und welcher mit Einrichtungen zur Regelung des Wärmeaustausches in den Knetzonen und in den Entgasungszonen unabhängig voneinander ausgestattet ist.

## Revendications

1. Procédé pour la préparation de polymères fondus sensiblement libres de composants volatils, de polyalkylènes ayant un indice de fluidité à chaud inférieur à 4 dg/min, par transformation de matériaux fondus contenant des composants volatils dans une extrudeuse de dégazéification refroidie caractérisé en ce que l'on traite le polyalkylène, avec une teneur en composants volatils inférieure à 10%, dans une ou plusieurs sections, avec une zone de malaxage sous une montée en pression et une zone de dégazéification sous pression réduite, la zone de malaxage étant refroidie avec un fluide réfrigérant et la zone de dégazéification étant en échange thermique avec un liquide ayant une température supérieure à la température du fluide réfrigérant de la zone de malaxage.

2. Procédé selon la revendication 1, dans lequel la zone de malaxage est refroidie avec un fluide réfrigérant de température au plus égale à 85°C.

3. Procédé selon la revendication 1, caractérisé en ce que la température de la chemise de l'extrudeuse dans la (les) zone(s) de dégazéification est supérieure à la température à laquelle, pour la composition et la température du polymère fondu en question, le polymère forme une masse en boule qui se décolle complètement ou partiellement de la vis de l'extrudeuse.

4. Procédé selon l'une quelconque des revendications 1—3, caractérisé en ce que la température de la chemise de l'extrudeuse dans la (les) zone(s) de dégazéification satisfait à la condition

$$T_{ext} < T_m - \Delta T_{cr}$$

dans laquelle $T_{ext}$ est la température de la paroi intérieure de la chemise de l'extrudeuse et $T_m$ est la température du polymère fondu, tandis que $\Delta T_{cr}$ représente la différence de température critique entre une paroi de l'extrudeuse refroidie et un polymère fondu à laquelle, pour la composition et la température du polymère fondu en question, le polymère fondu forme une masse en boule qui ne s'étale pratiquement pas sur la vis de l'extrudeuse.

7

5. Procédé selon l'une quelconque des revendications 1—4, caractérisé en ce que, dans la (les) zone(s) de malaxage, un agent de séparation des composants volatils est malaxé dans le matériau fondu.

6. Procédé selon la revendication 5, caractérisé en ce que l'on utilise l'eau et/ou la vapeur d'eau comme agent de séparation.

7. Procédé selon l'une quelconque des revendications 1—6, caractérisé en ce que le polymère fondu est soumis à un traitement préliminaire dans une zone de dégazéification éclair avec rétrodégazéification éclair, où la teneur en composants volatils est réduite d'une valeur initiale comprise entre 5 et 25% en poids à une valeur inférieure à 2—10% en poids.

8. Procédé selon l'une quelconque des revendications 1—7, caractérisé en ce que l'on utilise une extrudeuse de dégazéification munie d'un orifice de rétrodégazéification éclair et de deux zones de dégazéification directe sous pression réduite, la pression au niveau de l'orifice de rétrodégazéification étant environ égale à la pression atmosphérique, tandis que l'on maintient, dans la première zone de dégazéification, une pression comprise entre 50 et 250 mbars et, dans la deuxième zone de dégazéification, une pression comprise entre 10 et 100 mbars.

9. Procédé selon l'une quelconque des revendications 1—8, caractérisé en ce que l'on utilise une extrudeuse bi-vis avec vis en co-rotation.

10. Procédé selon la revendication 8, caractérisé en ce que l'on utilise une extrudeuse avec des vis parallèles s'engrenant totalement.

11. Procédé selon l'une quelconque des revendications 1—10, caractérisé en ce que la pression finale de l'extrudeuse à la sortie de l'extrudeuse après la sortie de la dernière zone de dégazéification est obtenue au moyen d'une pompe à engrenages.

12. Procédé selon la revendication 11, caractérisé en ce que l'on utilise une extrudeuse bi-vis dans laquelle la (les) zone(s) de malaxage est (sont) séparée(s) de la (des) zone(s) de dégazéification sous pression réduite au moyen de deux éléments à vis doubles ayant des angles d'hélice opposés.

13. Procédé selon l'une quelconque des revendications 1—12, caractérisé en ce que l'on traite un polyalkylène fondu qui consiste en un polymère ou un copolymère de l'éthylène ayant un indice de fluidité à chaud inférieur à 4 selon la norme ASTM D-1238, condition E.

14. Procédé selon la revendication 13, caractérisé en ce que l'on traite un polymère ou un copolymère de l'éthylène ayant un indice de fluidité à chaud inférieur à 3.

15. Procédé selon l'une quelconque des revendications 13—14, caractérisé en ce que l'on traite un polyalkylène fondu consistant en un polyéthylène linéaire basse densité.

16. Extrudeuse pour réaliser le procédé selon l'une quelconque des revendications 1—15, qui consiste en une extrudeuse bi-vis comprenant, outre une ou plusieurs zones de malaxage, une ou plusieurs zones de dégazéification et ayant été munie de dispositifs pour réguler indépendamment l'échange thermique dans les zones de malaxage et dans les zones de dégazéification.

0 068 561

FIG.1

FIG. 2

1